# EUROPEAN PATENT SPECIFICATION

(11) **EP 1 962 585 B1**
(45) Date of publication and mention of the grant of the patent: **26.08.2009**
(21) Application number: 06835674.0
(22) Date of filing: 21.12.2006
(51) Int. Cl.: A01M 1/14

(54) **DEVICE FOR CATCHING AND COLLECTING INSECTS**
VORRICHTUNG ZUM FANGEN UND SAMMELN VON INSEKTEN
DISPOSITIF SERVANT À CAPTURER ET À RECUEILLIR DES INSECTES

(30) Priority: 23.12.2005 NL 1030763
(43) Date of publication of application: 03.09.2008
(73) Proprietor: van Bers, Paul Hendrik, 3364 AL Sliedrecht (NL)
(72) Inventor: van Bers, Paul Hendrik, 3364 AL Sliedrecht (NL)
(74) Representative: Griebling, Onno
(86) International application number: PCT/NL2006/000652
(87) International publication number: WO 2007/073169

(56) References cited:
- DE-A1- 3 225 412
- DE-U1- 8 313 412
- US-A1- 2004 115 235

## Description

The invention relates to a device for catching and collecting insects, particularly for catching and collecting undesired, irritating and/or harmful insects such as flies, wasps, mosquito's, and the like.

Insects, and particularly flying insects, are a source of annoyance for men. Insects can be irritating, unhygienic there where food is prepared or eaten, or even dangerous if they sting and are poisonous or transfer germs. Therefore, various measures are known for fighting insects.

A known measure is directly spraying insects, or spraying a surface where insects like to sit, with a poisonous substance. Usually, the poisonous substance will quickly evaporate, so that the operation thereof only lasts a brief time. In a space treated, killed inspects will end up on the floor in a distributed way, after which they still must be cleared. Obviously, poisonous substances are not suitable for spaces where food is prepared.

With another known measure, insects are lured to a box, where they are killed by means of a high electrical voltage present there. A disadvantage of this measure is that the insects may "explode" during electrocution, in which case pieces of insect can fly around and can end up outside the box, which is undesirable in spaces which are sensitive from a hygienic point of view. Besides, a small safety risk is involved in applying a high voltage.

Further, a flycatcher is known which consists of a initially rolled up, wide plane strip of paper or plastic onto which a lure and adhesive has been arranged and which can be hung in a rolled out condition. Such an adhesive strip only works locally and further has the disadvantage that it dries out after passing of time. A further disadvantage is that, in warm spaces, the adhesive may drip. Because of the large length of the adhesive strip, there is a treasonable chance that someone walks against it. Further, the strip with corpses of inspects is an distasteful sight.

The German Gebrauchsmuster 83.13412 describes a device in which such wide planar strip is tightened onto two rollers. The rollers can be rotated in order to guide the strip past scraper means, in order to remove attached insect corpses, wherein the strip is further guided through a glue supply container in order to apply new glue. This only solves the disadvantage of the suspended strip that such hanging strip with insect corpses is a distasteful sight; on the downside, the -device is a bulky and unaesthetically looking unit. Further, this device still has the disadvantage also involved with said suspended strip, i.e. that the operation thereof is only locally, like a point source. The device does not prevent insects from entering a space, but only tries to catch insects present within the space. As long as those insects have not been caught yet, they are a source of irritation for the persons and/or animals present in said space. For catching insects from this space, lures are needed. As the space is larger, the effectiveness of the lures at a distance from the device (point source) decreases, or conversely, in order to achieve a certain effectiveness at a larger distance, a larger concentration of the lures on the lure carrier is needed. In turn, a larger concentration of the lures has, however, the disadvantageous effect that insects are lured from outside the space to inside.

An objective of the present invention is to provide a device capable of fighting the annoyance caused by insects in a safe, hygienic and environmentally friendly way, having a long, possibly continuous operational duration and spatial effect, and also easily to be operated and to be maintained.

More particularly, the present invention aims to provide a device which, better than the device described in German Gebrauchsmuster 83.13412, is capable of minimizing the annoyance of flying insects in a large space or even to keep the space free from flying insects.

To this end, according to the present invention a device according to claim 1 is provided for catching and collecting insects, comprising a lengthy carrier intended for carrying an adhesive; guiding means for mounting the carrier in such a way that it can be moved in its longitudinal direction; drive means for making the carrier move in its longitudinal direction; and application means for applying an adhesive onto the carrier when the carrier is moving past the application means. In the case of the device described in German Gebrauchsmuster 83.13412, the guiding means and the application means are incorporated in a common housing, such that the carrier does not leave the housing. In contrast, in the case of the device according the present invention, at least some of the guiding means are separate, and they are arranged along the contours of the space to be protected, so that the carrier is guided along a trajectory lying outside the housing and following the contour of the space to be protected. Thus, catching of insects takes place at the periphery of the space to be protected, so that insects are largely prevented from entering the space. Thus, the invention offers as it were a virtual maze along the contours of the space to be protected. If use is made of lures on the carrier, the concentration of lures can remain low while the largest effectivity is achieved at the contours of the space.

The carrier may have the shape of a planar ribbon. In a preferred embodiment, the carrier according to the present invention has a round cross section, for instance a wire, cord, rope or the like, wherein the diameter can be several millimetres. Namely, it has appeared that especially flies have the tendency to sit on such cords and the like, even without the presence of a lure. In the following, the carrier will for convenience sake be indicated as "cord".

In the case of the device described in German Gebrauchsmuster 83.13412, the loop-shaped strip entirely remains within the housing of the device. In contrast, the device according to the present invention comprises guide means (such as for instance pulleys) to tighten the carrier along the contours of the space to be protected. If this space is a room in a house, the carrier can be tightened along the edges of the ceiling, in which case the cord is located in the corner closed in by the wall and the ceiling. Usually, a room has a rectangular ceiling contour, but also in cases where a room has a different contour (for instance a Z-contour), the carrier according to the present invention can follow this contour. As a result, the carrier fits in the space in an aesthetically sound manner (the carrier is hardly or not noticeable), and functionally the carrier obtains the function of a barrier for incoming flies: since incoming insects have the tendency of settling onto a wall or a ceiling, they are always located at a relatively short distance from the cord and the chances are high that they are caught at a relatively short time. As a result, the entire space remains free from insects to a large extend. This applies particularly if the carrier is provided with lures. There where the known device must try to lure the insects present in the space towards itself, the device according to the present invention offers the important advantage that incoming insects are caught away so that insects are prevented to a large extent from actually entering the space concerned.

In principle, the device according to the invention can even be used in spaces of any size and even in the outer environment. For instance, the device according to the invention can be used for keeping a terrace, a beach, a meadow of a field free from low-flying insects. In the situation of such open spaces, it is also possible to make the carrier follow a trajectory not only along the contours of this space, but the trajectory can also be guided over the space one or multiple times for instance in a zigzag-pattern, in order to thus form a virtual ceiling above this open space through which insects pass less easily in practice, so that a film or maze is not needed for this.

During operation, the carrier may be displaced in its longitudinal direction continuously or stepwise by the drive means. It is also possible that the cord travels an entire loop once, and after that is held stationary during a longer time. During the displacement, the carrier is guided past the application means. The carrier can always be supplied with fresh adhesive by the application means. In principle, the device can be used during an unlimitedly long time by the continuous application of fresh adhesive during displacement of the carrier. The device does not have to distribute poisonous substances, and holds the caught insects, so that the invention can be applied in a hygienic way in for instance (professional) kitchens.

In a further embodiment of the device according to the invention, the application means are also arranged for applying one or more lures onto the carrier when the carrier moves past the application means. The lures can distribute along the contours of a space in a finally distributed way, and will attract insects present in the neighbourhood of the carrier. This measure further increases the effectiveness of the device.

The lures may be tuned to the type of insects to be caught. For flies, the presence of a lure is no precondition, but it is for for instance wasps. It is possible that the insects to be caught differ as a function of time (day/night; seasons) and that the lure to be applied is adapted to this. It is also possible that multiple insects must be caught at the same time, in which case it is possible that different lures are applied alternatively behind each other onto the carrier. It is also possible that different lures are applied onto the carrier next to each other, especially if the carrier is implemented as a planar strip (ribbon). Although the lures may thus be specific to certain insects, the device will then be multi-specific.

The application means may further be arranged for applying a plasticizer onto the carrier when the carrier moves past the application means. The adhesive present on the carrier may turn harder and less sticky after some time. As alternative to always removing the adhesive and applying new adhesive, the adhesive that has turned harder can be made softer by applying thereon a plasticizer, so that in the end less adhesive is required.

The device according to the invention is further provided with cleaning means for removing adhered insects from the carrier when the carrier moves past the cleaning means. Insects that are adhered to the carrier can always be removed from the carrier in a controlled manner by these cleaning means. Preferably, the cleaning means are also arranged for removing lures and adhesives from the carrier, and for removing possible other contaminations such as grease, dust and the like. This measure offers advantages if different lures and/or adhesives are to be applied, for instance when another type of insect is to be caught, or if the device must be free from adhesive, for instance when maintenance must be done to the device.

For collecting the insects and lures and adhesives removed from the carrier, the device has a collection tray. Preferably, this collection tray is implemented as an easily applicable, removable and closable disposable container. The caught insects and the removed lure and adhesive can be collected and discharged in a simple, clean, hygienic and environmentally friendly manner by these measures.

In further embodiments of the device according to the invention, the capacity of luring insects is further increased by the carrier being luminous are fluorescent, or because a fluorescent substance is applied onto the carrier, in which case the colour distribution of the emitted light is possibly adaptable, for instance by irradiating the carrier with a suitably chosen illumination means, or by changing the fluorescent substance to be applied.

According to a further embodiment of the invention, the insect luring capacity of the device can be increased by heating the carrier to a temperature above ambient temperature. This can be achieved by for instance an electrically conductive carrier, through which, with a non-dangerous low voltage, an electric direct current is guided for an even heating.

In further embodiments of the device according to the invention, control means are provided for controlling the displacement speed of the carrier, the type and quantity of the lures and adhesives, and the temperature of the carrier. Preferably, the control means are arranged for programming these variables in relation to one or more of the perimeters time, season, light intensity, ambient temperature, air humidity, type of insect. This programming may be a predefined programming, or a free programming by the user, but it is also possible that the device is self-learning or self-setting.

In a further embodiment of the device according to the invention, one or more replaceable reservoirs are provided, preferably automatically recognisable by the control means mentioned above according to a so called "plug and play" principle, having therein the lures and/or adhesives to be applied by the application means onto the carrier. If such reservoirs are empty after use, they may possibly be used as collection tray as mentioned above.

A reservoir for a lure and/or adhesive is intended to be used in the device according to the invention. For different lures and/or adhesives, there may then be multiple reservoirs. It is possible that the user places the reservoirs depending on the insects to be fought, but it is also possible that multiple reservoirs are placed in the device, which are automatically recognized by the control means, wherein the control means choose the reservoir to be used depending on the programming, the time of day, et cetera.

These and other aspects, features and advantages of the present invention will be further clarified by the following description with reference to the drawings, in which same reference numerals indicate same or similar parts, and in which:
- Figure 1: schematically shows a perspective view of a space in which a device according to the invention is arranged, and
- Figure 2: schematically shows a detail in cross section of the device of Figure 1.

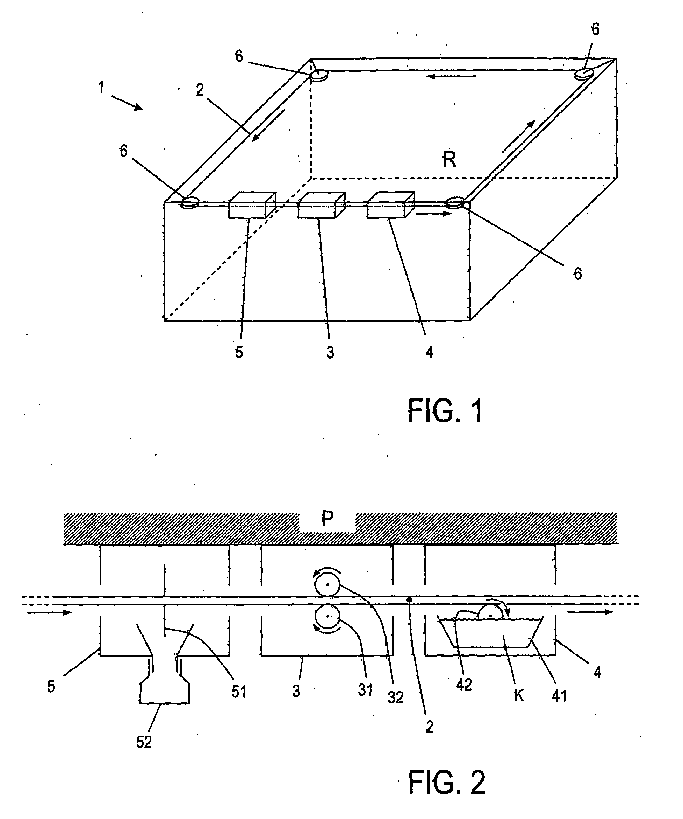

In figure 1, a perspective view of a space R is schematically shown, in this example a room within a house, in which a device 1 according to the invention is arranged. The device comprises an elongate carrier 2 in the form of a closed loop of a rope, cable, cord, wire, string, tape, ribbon, belt, hose, or the like. In a specific embodiment, the carrier has a round cross section; for sake of convenience, the carrier is hereinafter also indicated as "cord", but this should not be explained in a limiting way. The cord in this example is arranged under tension by means of four guide rollers 6 at some distance of the walls and at comparable distance of the ceiling of the space R, the cord 2 being displaceable in its longitudinal direction, as indicated by arrows. In other embodiments of the device according to the invention, the cord may have an end, wherein the cord during operation moves forth and back and is always rolled up and rolled out, respectively, at the ends. The device 1 further comprises a drive unit 3, an application unit 4 and a cleaning unit 5, which are arranged on the ceiling or on a wall in such a way that the carrier 2 extends past or through the unit 3, 4 and 5 and is in contact with the (not shown) drive means, application means and cleaning means present in these units. Figure 1 only schematically shows the contour of the housings of the units 3, 4 and 5, which contour is shown as block-shaped, but it should be clear that other contours are also possible. It is possible that the units 3, 4 and 5 are arranged in different housings indeed, as shown; in that case, the units 3, 4 and 5 can be arranged separate from each other at any locations along the cord 2, al/be/it preferably in the order 5-3-4. However, the units 3, 4 and 5 then are preferably placed next to each other. It is, however, also possible that the units 3, 4 and 5 are integrated in a common housing, which even is preferred for the consumers market.

Initially, for instance after mounting the device 1 or after replacing the carrier, there are no lures and/or adhesives present on the carrier. The drive means in drive unit 3 drive the carrier 2 continuously or with intervals, in order to make this move around in the direction shown with arrows with a possibly controllable, usually small velocity. In doing so, the carrier 2 preferably, and as shown, subsequently passes the cleaning unit 5, the drive unit 3 and the application unit 4. While the carrier 2 is displaced in itself, an adhesive is applied on the carrier 2 in application unit 4 by the application means. It is also possible that one, or possibly alternatively, multiple lures are applied onto the carrier by the application means; in the case of a wide carrier, multiple lures can be applied next to each other onto the carrier. After application of the lures and adhesives, each and any part of the carrier 2 travels a trajectory in the space R defined by the guide rollers 6. The time needed for finishing this trajectory obviously depends inter alia on the drive speed. During the stay, moving or standing still, of the driver 2 in the space R, insects which, possibly attracted by the lure, go sit onto the carrier 2 will stick to the adhesive. An important advantage of the presence of a cleaning unit 5 is that the cleaning means present herein are capable of removing insects from the carrier 2. If desired, the lures and adhesives can also be removed by the cleaning means, for example when an other type of insect is to be caught or in the case of maintenance to the device.

Figure 2 schematically shows a detail in cross section of the device 1 of figure 1. It can be seen from figure 2 that then drive unit 3, the application unit 4 and the cleaning unit 5 in this example are arranged to the ceiling P, and further a part of the carrier 2 can be seen. The said units could possibly also be arranged at any height to a wall, for instance within manual reach. In figure 2, the units 3, 4 and 5 are shown only very schematically for sake of simplicity.

The drive unit 3 comprises drive means which in this example are formed by two drive rollers 31, 32 which are drivable in mutually opposite directions and between which the carrier 2 is located. Driving the drive rollers 31, 32 takes place with an electric motor or other driver not shown for sake of simplicity. The other driver can for instance be a handle to be operated manually, possibly in cooperation with a spring to be wound, for situations where a connection to mains is not or not easily accessible and in which supply by means of batteries is inconvenient.

The application unit 4 comprises in this example a tray 41 with adhesive K and application means in the form of a roller 42 which is in contact with the adhesive K in the tray 41 and with the carrier 2. When the carrier 2 moves, it will make the roller 42 rotate. Then, the roller 42 takes up adhesive K from the tray 41 and deposit the adhesives K onto the carrier 2. Instead of a passive roller 42 to be moved by the carrier 2 it is also possible that the roller 42 is driven by a motor. It is even possible that the roller 42 functions as drive roller for the cord, possibly in cooperation with a counter roller, and it is even possible that the application means and the drive means are integrated.

In other possible embodiments, the application means can be formed by a brush, a sponge, a glue pen, a sprayer or the like. Further it is possible that the application means are adaptable to a desirable quantity of the adhesive K. It is further possible to provide the adhesive in exchangeable reservoirs, or cartridges which can be coupled to the application unit in a simple manner. It is further possible that the carrier is guided through a bath of the adhesive to be applied.

Besides the application means shown in figure 2, it is possible that the application unit comprises application means which are also arranged for applying one or multiple lures, for instance alternatively, in a metered manner, which can be implemented in the same way as described above.

The cleaning unit 5 comprises cleaning means, in this example scraper means, in the form of one or more plates 51 arranged perpendicularly to the longitudinal direction of the carrier 2, for instance provided with a round or oblong hole, corresponding to the cross section of the carrier 2, or a groove starting at the edge, through which the carrier 2 can be displaced with little play. During displacement of the carrier 2 past the plate 51 or through the hole or the groove in the plate 51, insects which are located on the carrier 2 are scraped off from the carrier 2 and are collected in a collection tray 52 arranged under the scraper means. This collection tray 52 is preferably implemented as an easily removable and closable container, disposable reservoir or the like. Further, this collection tray 52 is preferably provided with a detection mechanism to detect whether the collection tray gets full, and for giving a signal in that case that stops the drive mechanism.

Possibly, the cleaning unit 5 can comprise high voltage means for efficiently killing insects sticking to the carrier and stilt being alive. This preferably is done in a close space, before the insects are removed from the carrier.

It will be clear to a person skilled in the art that the invention is not limited to the exemplary embodiments discussed in the above but that several variations and modifications are possible within the protective scope of the invention as defined in the attached claims.

The invention can be applied both in inner spaces such as residential houses, offices, hospitals, hotel and catering places, animal stables and the like, and in open spaces such as markets, hotel and catering terraces, camp sites, open air theatres, parks, kennels, and meadows for animals.

The invention can also be implemented in combination with for instance electric fence wire, electricity lines and data transmission lines.

In a variation, it is possible that the burden of insects is fought by applying onto the carrier an insect-repellent substance.

It is further possible that the adhesive is applied on exiting the device according to the invention. This may for instance happen after the lure has been arranged, which may offer advantages because the consumption of lures can be reduced by this, and a more even evaporation and thereby better spatial distribution of the lures can be achieved.

It is further possible that the device is provided with an automatic and programmable control, for instance a computer, a micro controller or the like. It is then for instance possible that the control has a program which adapts the lures and/or adhesives to be applied automatically to the time of year (for instance flies in spring, wasps in summer), or to the time of day (for instance flies and wasps during the day, mosquitoes and moths during the night), or to the weather conditions (for instance wasps in case of dry and warm weather, flies and mosquitoes in case of humid and sultry weather), in which case the correct lures and/or adhesives will be automatically chosen from the automatically recognizable reservoirs arranged. In order to make the correct choice from the program to be applied, the device for instance has sensors for time, temperature, humidity, light. It is also possible that the control has programs selectable by the user, for instance specifically for wasps, horse flies, flies, mosquitoes, depending on the insects which are bothering the user at a certain moment, and it is even possible that multiple lures are applied, for instance shifted in time or next to each other on the cord. Programming of such control can take place through sensors, pre-programmed or manually, with a wireless (for instance IR) or wired control.

The device can operate at several speeds. The carrier can be moved along with a constant, small speed, for instance to travel a round once per hour. The carrier can also be moved along intermittentely, in which case the carrier alternatively moves and stands still. The carrier can also be moved along with a relatively high speed to travel a round in relatively short time, for instance in a cleaning mode to remove all insects from the carrier, or for instance to prepare the carrier by applying a (other) lure or adhesive or by irradiating a fluorescent carrier.

Possible lures can act on different sensors of the insects. The lures can comprise an aromatic substance, in which case an other aromatic substance can be applied depending on the type of insect. The lures can also comprise a fluorescent substance, wherein a different colour or shine of light can be applied depending on the type of insect. Invisible light (UV) is possible also.

It is also possible that the cord is provided with a resistance wire, through which a current can be supplied to set a temperature; depending on the type of insect, a different temperature can be applied.

It is also possible that the cord is under tension and is made to vibrate, for instance by means of mechanical excitation and/or piezoelements integrated in the cord; a different frequency can be applied depending on the type of insect.

It is further possible that the device is arranged outside the space to be protected.

## Claims

1. Device (1) for making and keeping insects-free a space (R) to be protected, comprising:
an elongate carrier (2) intended for carrying an adhesive (K); guide means (6) for mounting the carrier (2) in such a way that it is displaceable in its longitudinal direction;
drive means (31, 32) for making the carrier (2) move in its longitudinal direction; and
application means (42) for applying an adhesive (K) onto the carrier (2) when the carrier (2) moves past the application means (42);
**characterized in that**
the guide means (6) are arranged in such a manner that they define for the carrier (2) a trajectory which follows the contour of the space (R) to be protected.

2. Device according to claim 1, wherein the application means (42) are also designed for applying onto the carrier (2) one or more lures when the carrier (2) moves past the application means (42).

3. Device according to claim 1 or 2, wherein the application means (42) are further designed for applying onto the carrier, (2) a plasticizer when the carrier (2) moves past the application means (42).

4. Device according to any of the previous claims, further provided with cleaning means (51) for removing adhered insects from the carrier (2) when the carrier (2) moves past the cleaning means (51).

5. Device according to claim 4, wherein the cleaning means (51) are further designed for removing from the carrier (2) adhesive substances (K) and possibly other contaminations.

6. Device according to claim 4 or 5, wherein a collection tray (52) is provided for collecting the insects and adhesives (K) to be removed from the carrier (2) by the cleaning means (51).

7. Device according to claim 6, wherein the collection tray (51) is implemented as an easily arrangeable, removable and closable disposable container.

8. Device according to any of the previous claims, wherein the carrier (2) is light-emitting or is provided with a light-emitting material.

9. Device according to any of the previous claims, wherein the carrier (2) is fluorescent or is provided with a fluorescent material.

10. Device according to any of the previous claims, wherein control means are provided for controlling the displacement speed of the carrier (2), and/or the type of adhesives (K), and/or the quantity of the adhesives (K), and/or the type of possible lures, and/or the quantity of possible lures.

11. Device according to claim 10, wherein the carrier (2) is electrically conductive, and wherein the control means are designed for keeping the temperature of the carrier (2) above ambient temperature by supplying an electrical current through the carrier (2).

12. Device according to claim 10 or 11, wherein the control means are designed for programming the displacement speed of the carrier (2), and/or the type of adhesives (K), and/or the quantity of the adhesives (K), and/or the type of possible lures, and/or the quantity of possible lures in relation to one or more of the parameters time, season, light intensity, ambient temperature, air humidity, type of insect.

13. Device according to any of the previous claims 10-12, wherein the control means are designed for moving the carrier (2) with constant speed.

14. Device according to any of the previous claims 10-12, wherein the control means are designed for making the carrier (2) alternatively move and stand still.

15. Device according to any of the previous claims 10-14, wherein the control means are designed to apply onto the carrier alternatively different lures and/or adhesives (K) behind each other, or to apply onto the carrier different lures and/or adhesives (K) next to each other.

16. Device according to any of the previous claims 10-15, wherein the control means are designed to make the carrier (2) travel a complete loop with relatively large speed for changing the composition of the adhesives (K) and/or the possible lures on the carrier, as response to reaching a certain time or as response to receiving a user instruction.

17. Device according to any of the previous claims 10-16, wherein the carrier (2) is fluorescent or is provided with a fluorescent material, wherein the device is provided with at least one lamp for activating the fluorescent material, and wherein the control means are designed to switch on the lamp and make the carrier (2) travel a complete loop at relatively large speed for irradiating the carrier by the lamp.

18. Device according to any of the previous claims, wherein one or more exchangeable, automatically recognizable reservoirs (41) are provided with therein the lures and/or adhesives (K) to be applied onto the carrier (2) by the application means (42).

19. Device according to any of the previous claims, wherein the guide means (6) comprise pulleys.

20. Device according to any of the previous claims, wherein the carrier (2) has a round cross section.

21. Device according to any of the previous claims, wherein a part of the trajectory of the carrier extends over the space to be protected.

22. Device according to any of the previous claims, wherein a virtual fence around the space to be protected defines, in order to prevent insects from entering the space.

23. Device according to any of the previous claims, wherein the space to be protected is a room in a building, or a part of a terrace, a beach, a field, a meadow.

24. Method for making and keeping a space (R) to be protected insect-free, comprising the steps of:
providing a device comprising:
- an elongate carrier (2) intended for carrying an adhesive (K);
- guide means (6) for mounting the carrier (2) in such a way that it is displaceable in its longitudinal direction;
- drive means (31, 32) for making the carrier (2) move in its longitudinal direction; and
- application means (42) for applying an adhesive (K) onto the carrier (2) when the carrier (2) moves past the application means (42); **characterized by**
mounting the guide means (6) along the contour of the space (R) to be protected, so that they define a trajectory for the carrier (2) following a contour of the space (R) to be protected.

## Patentansprüche

1. Vorrichtung (i) zum Herstellen und Beibehalten eines insektenfreien Raums (R), der zu schützen ist, aufweisend:
einen länglichen Träger (2), der für das Tragen eines Klebemittels (K) bestimmt ist; Führungsmittel (6) zum Befestigen des Trägers (2) dergestalt, dass er in seiner Längsrichtung versetzbar ist;
Antriebsmittel (31, 32), um den Träger (2) in der Längsrichtung bewegen zu können; und
Auftragemittel (42) zum Auftragen eines Klebemittels (K) auf den Träger (2), wenn sich der Träger (2) über das Auftragemittel (42) hinwegbewegt;
**dadurch gekennzeichnet, dass**
die Führungsmittel (6) dergestalt angeordnet sind, dass sie für den Träger (2) eine Bewegungsbahn definieren, die der Umrisslinie des zu schützenden Raums (R) folgt.

2. Vorrichtung gemäß Anspruch 1, wobei die Auftragemittel (42) auch ausgelegt sind, um auf dem Träger (2) ein oder mehrere Lockmittel aufzutragen, wenn sich der Träger (2) über das Auftragemittel (42) hinwegbewegt.

3. Vorrichtung gemäß Anspruch 1 oder 2, wobei die Auftragemittel (42) weiterhin ausgelegt sind, um auf dem Träger (2) ein oder mehrere Weichmacher aufzutragen, wenn sich der Träger (2) über das Auftragemittel (42) hinwegbewegt.

4. Vorrichtung gemäß einem der vorhergehenden Ansprüche, weiterhin mit einem Reinigungsmittel (51) zum Entfernen der angeklebten Insekten von dem Träger (2) ausgebildet, wenn sich der Träger (2) über das Reinigungsmittel (51) hinwegbewegt.

5. Vorrichtung gemäß Anspruch 4, wobei die Reinigungsmittel (51) weiterhin ausgelegt sind, um von dem Träger (2) Klebestoffe (K) und möglicherweise andere Verschmutzungen zu entfernen.

6. Vorrichtung gemäß Anspruch 4 oder 5, wobei eine Auffangwanne (52) zum Auffangen der Insekten und Klebemittel (K) vorgesehen ist, die von dem Träger (2) durch das Reinigungsmittel (51) entfernt werden sollen.

7. Vorrichtung gemäß Anspruch 6, wobei die Auffangwanne (51) als ein einfach anordenbarer, entfernbarer und verschließbarer Wegwerfbehälter ausgeführt ist.

8. Vorrichtung gemäß einem der vorherigen Ansprüche, wobei der Träger (2) Licht aussendet oder mit einem Licht aussendenden Material versehen ist.

9. Vorrichtung gemäß einem der vorherigen Ansprüche, wobei der Träger (2) fluoreszierend ist oder mit einem fluoreszierenden Material versehen ist.

10. Vorrichtung gemäß einem der vorhergehenden Ansprüche, wobei Steuermittel vorgesehen sind, um die Versetzungsgeschwindigkeit des Trägers (2) und/oder die Art der Klebemittel (K) und/oder die Menge der Klebemittel (K) und/oder die Art der möglichen Lockmittel und/oder die Menge der möglichen Lockmittel zu steuern.

11. Vorrichtung gemäß Anspruch 10, wobei der Träger (2) elektrisch leitfähig ist, und wobei die Steuermittel ausgelegt sind, um die Temperatur des Trägers (2) über der Umgebungstemperatur zu halten, indem elektrischer Strom durch den Träger (2) geleitet wird.

12. Vorrichtung gemäß Anspruch 10 oder 11, wobei die Steuermittel zur Programmierung der Versetzungsgeschwindigkeit des Trägers (2) und/oder der Art der Klebemittel (K) und/oder der Menge der Klebemittel (K) und/oder der Art der möglichen Lockmittel und/oder der Menge der möglichen Lockmittel in Bezug zu einem oder mehreren der Parameter Zeit, Jahreszeit, Lichtintensität, Umgebungstemperatur, Luftfeuchtigkeit und Insektenart ausgelegt sind.

13. Vorrichtung gemäß einem der vorhergehenden Ansprüche 10 - 12, wobei die Steuermittel ausgelegt sind, um den Träger (2) in konstanter Geschwindigkeit zu bewegen.

14. Vorrichtung gemäß einem der vorhergehenden Ansprüche 10 - 12, wobei die Steuermittel ausgelegt sind, um den Träger (2) abwechselnd zu bewegen und anzuhalten.

15. Vorrichtung gemäß einem der vorhergehenden Ansprüche 10 - 14, wobei die Steuermittel ausgelegt sind, um auf dem Träger abwechselnd unterschiedliche Lockmittel und/oder Klebemittel (K) hintereinander aufzutragen, oder um auf dem Träger unterschiedliche Lockmittel und/oder Klebemittel (K) nebeneinander aufzutragen.

16. Vorrichtung gemäß einem der vorhergehenden Ansprüche 10 - 15, wobei die Steuermittel ausgelegt sind, damit der Träger (2) eine vollständige Schleife mit relativ hoher Geschwindigkeit durchlaufen kann, um die Zusammenstellung der Klebemittel (K) und/oder möglicher Lockmittel auf dem Träger zu ändern, als Reaktion auf das Erreichen einer bestimmten Zeit oder als Reaktion auf den Empfang einer Benutzeranweisung.

17. Vorrichtung gemäß einem der vorhergehenden Ansprüche 10 - 16, wobei der Träger (2) fluoreszierend ist oder mit einem fluoreszierenden Material versehen ist, wobei die Vorrichtung mit wenigstens einer Lampe versehen ist, um das fluoreszierende Material zu aktivieren, und wobei die Steuermittel ausgelegt sind, um die Lampe einzuschalten und den Träger in relativ hoher Geschwindigkeit über die vollständige Schleife fahren zu lassen, um den Träger mit der Lampe zu bestrahlen.

18. Vorrichtung gemäß einem der vorhergehenden Ansprüche, wobei ein oder mehrere austauschbare, automatisch erkennbare Behälter (41) mit darin befindlichen Lockmitteln und/oder Klebemitteln (K) vorgesehen sind, die auf dem Träger (2) durch die Auftragemittel (42) aufzutragen sind.

19. Vorrichtung gemäß einem der vorhergehenden Ansprüche, wobei die Führungsmittel (6) Rollen aufweisen.

20. Vorrichtung gemäß einem der vorhergehenden Ansprüche, wobei der Träger (2) einen runden Querschnitt aufweist.

21. Vorrichtung gemäß einem der vorhergehenden Ansprüche, wobei ein Teil der Bewegungsbahn des Trägers über den zu schützenden Raum verläuft.

22. Vorrichtung gemäß einem der vorhergehenden Ansprüche, wobei ein faktischer Zaun um den zu schützenden Raum definiert wird, um Insekten vom Eintritt in den Raum abzuhalten.

23. Vorrichtung gemäß einem der vorhergehenden Ansprüche, wobei der zu schützende Raum ein Raum in einem Gebäude oder ein Teil einer Terrasse, eines Strands, eines Felds oder einer Wiese ist.

24. Verfahren zum Herstellen und Beibehalten eines Raums (R), der als insektenfrei zu schützen ist, die Schritte aufweisend:
Vorsehen einer Vorrichtung aufweisend:
- einen länglichen Träger (2), der für den Transport eines Klebemittels (K) bestimmt ist;
- Führungsmittel (6) zum Montieren des Trägers (2) dergestalt, dass er in seiner Längsrichtung versetzbar ist;
- Antriebsmittel (31, 32), um den Träger (2) in seiner Längsrichtung bewegen zu können; und
- Auftragemittel (42) zum Auftragen eines Klebemittels (K) auf den Träger (2), wenn sich der Träger (2) über das Auftragemittel (42) hinwegbewegt;
**gekennzeichnet durch**
Montieren der Führungsmittel (6) entlang der Umrisslinie des zu schützenden Raumes (R), so dass sie eine Bewegungsbahn für den Träger (2) definieren, der einer Umrisslinie für den zu schützenden Raum (R) folgt.

## Revendications

1. Dispositif (1) pour former et maintenir exempt d'insecte un espace (R) à protéger, comprenant :
un support allongé (2) destiné à porter un adhésif (K) ;
des moyens de guidage (6) pour monter le support (2) de telle manière qu'il peut être déplacé dans sa direction longitudinale ;
un moyen d'entraînement (31, 32) pour déplacer le support (2) dans sa direction longitudinale ; et
un moyen d'application (42) pour appliquer un adhésif (K) sur le support (2) quand le support (2) passe devant le moyen d'application (42) ;
**caractérisé en ce que** les moyens de guidage (6) sont placés de telle manière qu'ils définissent pour le support (2) une trajectoire qui suit le contour de l'espace (R) à protéger.

2. Dispositif selon la revendication 1, dans lequel le moyen d'application (42) est également conçu pour appliquer sur le support (2) un ou plusieurs leurre(s) quand le support (2) passe devant le moyen d'application (42).

3. Dispositif selon la revendication 1 ou 2, dans lequel le moyen d'application (42) est conçu en outre pour appliquer sur le support (2) un plastifiant quand le support (2) passe devant le moyen d'application (42).

4. Dispositif selon l'une quelconque des revendications précédentes, pourvu en outre d'un moyen de nettoyage (51) pour retirer du support (2) les insectes collés quand le support (2) passe devant le moyen de nettoyage (51).

5. Dispositif selon la revendication 4, dans lequel le moyen de nettoyage (51) est également conçu pour retirer du support (2) des substances adhésives (K) et d'éventuelles autres impuretés.

6. Dispositif selon la revendication 4 ou 5, dans lequel un bac de récupération (52) est prévu pour recueillir les insectes et adhésifs (K) devant être retirés du support (2) par le moyen de nettoyage (51).

7. Dispositif selon la revendication 6, dans lequel le bac de récupération (52) est un récipient jetable, à installation facile, amovible et qui peut être fermé.

8. Dispositif selon l'une quelconque des revendications précédentes, dans lequel le support (2) émet de la lumière ou est pourvu d'un matériau émettant de la lumière.

9. Dispositif selon l'une quelconque des revendications précédentes, dans lequel le support (2) est fluorescent ou est pourvu d'un matériau fluorescent.

10. Dispositif selon l'une quelconque des revendications précédentes, dans lequel un moyen de commande est prévu pour commander la vitesse de déplacement du support (2), et/ou le type d'adhésifs (K), et/ou la quantité d'adhésifs (K), et/ou le type d'éventuels leurres, et/ou la quantité d'éventuels leurres.

11. Dispositif selon la revendication 10, dans lequel le support (2) est électriquement conducteur, et dans lequel le moyen de commande est adapté pour maintenir la température du support (2) au-dessus de la température ambiante en faisant circuler un courant électrique dans le support (2).

12. Dispositif selon la revendication 10 ou 11, dans lequel le moyen de commande est adapté pour programmer la vitesse de déplacement du support (2), et/ou le type d'adhésifs (K), et/ou la quantité d'adhésifs (K), et/ou le type d'éventuels leurres, et/ou la quantité d'éventuels leurres relativement à un ou plusieurs des paramètres suivants : heure, saison, intensité lumineuse, température ambiante, humidité de l'air, type d'insecte.

13. Dispositif selon l'une quelconque des revendications 10 à 12, dans lequel le moyen de commande est adapté pour déplacer le support (2) avec une vitesse constante.

14. Dispositif selon l'une quelconque des revendications 10 à 12, dans lequel le moyen de commande est adapté pour alternativement déplacer et arrêter le support (2).

15. Dispositif selon l'une quelconque des revendications 10 à 14, dans lequel le moyen de commande est adapté pour appliquer sur le support alternativement différents leurres et/ou adhésifs (K) les uns derrière les autres, ou pour appliquer sur le support différents leurres et/ou adhésifs (K) les uns à côté des autres.

16. Dispositif selon l'une quelconque des revendications 10 à 15, dans lequel le moyen de commande est adapté pour déplacer le support (2) sur une boucle complète avec une vitesse relativement grande pour changer la composition des adhésifs (K) et/ou les éventuels leurres sur le support, en réponse à une certaine heure ou en réponse à la réception d'une instruction d'utilisateur.

17. Dispositif selon l'une quelconque des revendications 10 à 16, dans lequel le support (2) est fluorescent ou est pourvu d'un matériau fluorescent, le dispositif étant pourvu d'au moins une lampe pour activer le matériau fluorescent, et le moyen de commande étant adapté pour allumer la lampe et pour déplacer le support (2) sur une boucle complète avec une vitesse relativement grande pour irradier le support au moyen de la lampe.

18. Dispositif selon l'une quelconque des revendications précédentes, dans lequel un ou plusieurs réservoirs échangeables et reconnaissables automatiquement (41) sont prévus, contenant les leurres et/ou les adhésifs (K) à appliquer sur le support (2) avec le moyen d'application (42).

19. Dispositif selon l'une quelconque des revendications précédentes, dans lequel les moyens de guidage (6) comprennent des poulies.

20. Dispositif selon l'une quelconque des revendications précédentes, dans lequel le support (2) est de section ronde.

21. Dispositif selon l'une quelconque des revendications précédentes, dans lequel une partie de la trajectoire du support s'étend au-dessus de l'espace à protéger.

22. Dispositif selon l'une quelconque des revendications précédentes, dans lequel est définie une barrière virtuelle autour de l'espace à protéger, afin d'empêcher les insectes d'entrer dans l'espace.

23. Dispositif selon l'une quelconque des revendications précédentes, dans lequel l'espace à protéger est une pièce dans un bâtiment, ou une partie d'une terrasse, d'une plage, d'un champ, d'un pré.

24. Procédé pour former et maintenir exempt d'insecte un espace (R) à protéger, comprenant les étapes consistant à :
fournir un dispositif comprenant :
- un support allongé (2) destiné à porter un adhésif (K) ;
- des moyens de guidage (6) pour monter le support (2) de telle manière qu'il peut être déplacé dans sa direction longitudinale ;
- un moyen d'entraînement (31, 32) pour déplacer le support (2) dans sa direction longitudinale ; et
- un moyen d'application (42) pour appliquer un adhésif (K) sur le support (2) quand le support (2) passe devant le moyen d'application (42) ;
**caractérisé par** le fait de monter les moyens de guidage (6) le long du contour de l'espace (R) à protéger, de sorte qu'ils définissent une trajectoire pour le support (2) suivant un contour de l'espace (R) à protéger.
